# EUROPEAN PATENT APPLICATION

(11) **EP 3 838 031 A1**
(43) Date of publication of application: **23.06.2021**
(21) Application number: 19218589.0
(22) Date of filing: 20.12.2019
(51) Int. Cl.: A24F 40/65, A24F 40/50, A61M 15/06, H04W 4/80

(54) **SMOKING SUBSTITUTE SYSTEM AND A METHOD OF SYNCING AT LEAST TWO SMOKING SUBSTITUTE DEVICES**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

The present invention relates to a smoking substitute device and particularly, although not exclusively, to a smoking substitute device, a smoking substitute system and a method of syncing at least two smoking substitute devices. Most smoking substitute devices currently on the market are configured to operate in isolation of other devices, a plurality of smoking substitute devices arranged in the vicinity of one another, e.g. used by a plurality of users in the vicinity of one another act independently. Such independent operation while arranged in the vicinity of one another may make it difficult to properly operate one's own device, due to conflicting information being received from the plurality of devices. Accordingly, there is provided a smoking substitute system (1), comprising a smoking substitute device (10,110,110a,b,c), and a processing unit (130,2,4) in communicative connection with the smoking substitute device and adapted to detect a presence of at least one further smoking substitute device (10,110,110a,b,c), wherein, when the presence of the at least one further smoking substitute device is detected, a dedicated function of each smoking substitute device is syncable.

## Description

### TECHNICAL FIELD

The present invention relates to a smoking substitute device and particularly, although not exclusively, to a smoking substitute device, a smoking substitute system and a method of syncing at least two smoking substitute devices.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco pic. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

In particular, the present inventor(s) have observed that when most smoking substitute devices currently on the market are configured to operate in isolation of other devices, a plurality of smoking substitute devices arranged in the vicinity of one another, e.g. used by a plurality of users in the vicinity of one another act independently. Such independent operation while arranged in the vicinity of one another may make it difficult to properly operate one's own device, due to conflicting information being received from the plurality of devices.

The present invention has been devised in light of the above considerations.

### Summary of the Invention

According to a first aspect of the present invention, there is provided there is provided a smoking substitute system, comprising a smoking substitute device, and a processing unit in communicative connection with the smoking substitute device and adapted to detect a presence of at least one further smoking substitute device, wherein, when the presence of the at least one further smoking substitute device is detected, a dedicated function of each smoking substitute device is syncable.

According to a second aspect of the present invention, there is provided a method of syncing at least two smoking substitute devices, comprising detecting, by a processing unit in communicative connection with a smoking substitute device, a presence of at least one further smoking substitute device, and syncing a dedicated function of each smoking substitute device, when the presence of the at least one further smoking substitute device is detected.

When using a smoking substitute device, a user is usually receiving feedback from the device, e.g. to a current operational status. The feedback may of a visual, acoustic or haptic type. Providing such a feedback may be seen as one type of dedicated function. Another type of function may be an operational function or in other words may relate to an operational parameter used to set a certain function of the device, e.g. a puff function, a puff intensity function, a puff duration function, an activation function, a lock function and a deactivation function. In other words, is may be conceivable that the dedicated function sets an intensity of nicotine, or a nicotine dose provided to a user of the smoking substitute device during use.

When a plurality of users, each with their own smoking substitute device are near each other, a synced operation of the smoking substitute devices may be beneficial. E.g. when in a confined space, like a dedicated smoking area, it may be beneficial to synchronise the operation of the smoking substitute devices like limiting the number of (total) puffs the users may take jointly, so to avoid surpassing a certain exhale fume concentration, possibly resulting in an overexposure to exhales of bystanders. To achieve this limitation, present (i.e. close by) smoking substitute devices may agree on a defined maximum exposure situation, in other words their operation may be synced, and subsequently the operation of the so synced devices may be limited to avoid the aforementioned overexposure situation, by e.g. limiting the number of puffs an individual smoking substitute device user may take, e.g. in a certain time period. At the end of a use, an automatic (synced) locking of a smoking substitute device may be initiated, thereby avoiding the immediate continued or repeated use of the smoking substitute device by a user.

Likewise, in a multi device scenario, e.g. again in a confined space, like a dedicated smoking area, a visual indication given to a user by their own device, may result in overexpose of users or bystanders to visual stimuli, possibly resulting in a serious medical condition like triggering a seizure. To avoid such a situation, present smoking substitute devices may sync a visual indicator, like an illumination function, to limit maximum brightness, or sync a repeating signal, like a glow to a similar frequency or similar colour.

To avoid such negative impact that in itself potentially has nothing or little to do with the act of using the smoking substitute device per se, it may thus be beneficial to sync the operational behaviours of a plurality of devices in close proximity.

In order to allow such a synchronization, a smoking substitute device, either by itself or via a processing unit connected thereto, like a processor, mobile communication device, a smartphone or an application server, may detect the presence of at least one further smoking substitute device. When in the context of the following and preceding description it is mentioned that a smoking substitute device may perform a certain action, like detecting the presence of another smoking substitute device or sending or receiving a signal for detecting the presence or communicating with another device, is should be understood that this functionality may either be implemented in the smoking substitute device itself, or may be realised by a processing unit connected thereto, like a processor, mobile communication device, a smartphone or an application server, in other words, may be realised by an associated element.

In order to achieve this detection, the smoking substitute device may send out a signal or may be adapted to receive a signal sent out by another smoking substitute device. Such a signal may be implemented as a beacon, like a Bluetooth beacon signal or a Bluetooth low energy beacon. Consequently, there may not be the need to establish an actual communication between (a plurality of) (smoking substitute) devices, but each device may receive and send such a beacon signal, possibly adapting the beacon, e.g. by at least one synchronization parameter, such that a defined synchronization may be established. In order to achieve this, a beacon may comprise information about what function to be synchronized, and how and when such a sync should be established, like e.g. setting a defined frequency for an increasing and decreasing glowing operation and an associated glow colour. Alternatively, information about an absolute or relative position may suffice as well.

A synchronization behaviour may be switched on and off for the smoking substitute device, either directly on the smoking substitute device or via an application running on the mobile device. The synchronization behaviour may be adapted via synchronization settings, e.g. specifying a type of operation to by synchronized, like a colour or glow, and parameters of the synchronization, like setting a similar colour, but a different maximum glow intensity and a dedicated frequency curve.

Such a synchronization may thus influence the behaviour of the devices, which in turn may influence a group dynamic of a group of users that are so synchronized, i.e. their smoking substitute device being synchronized. A synchronized glow, for example, may provide a feeling of togetherness any may make using a smoking substitute device feel less separated and lonely.
Syncing two devices may also be seen as one device following the behaviour or adapting its behaviour to that of another device, so no coordinated syncing of both devices is required. One device may sync its behaviour to the other device

According to a preferred embodiment of the smoking substitute system, detecting a presence may comprise communicating with the least one further smoking substitute device.

According to another preferred embodiment of the smoking substitute system, the presence of the at least one further smoking substitute device may be detected either directly or via at least one further processing unit in communicative connection with the at least one further smoking substitute device.

According to a further preferred embodiment of the smoking substitute system, the dedicated function may be at least one function out of the group consisting of a visual function, an illumination function, an audible function, an acoustic function, a haptic function, a puff function, a puff intensity function, a puff duration function, an activation function, a lock function and a deactivation function.

According to a further preferred embodiment of the smoking substitute system, the smoking substitute device may further comprise at least one illumination element, wherein the illumination element of the smoking substitute device may be synced with a respective illumination element of the at least one further smoking substitute device when the presence of the least one further smoking substitute device has been detected.

According to a further preferred embodiment of the smoking substitute system, the illumination element of the smoking substitute device and the illumination element of the at least one further smoking substitute device may be synced such that the illumination elements illuminate is a similar colour and /or pulse with a similar frequency, in particular have synced minima and maxima of pulsation.

A similar colour may be understood as a colour that is identical or at least the same colour to an extent so that no significant difference is discernible. Such a definition may apply to further embodiments of dedicated functions. E.g. a haptic function may be similar if no significant difference is experienced by a user, or an acoustic function may be similar if a tone is received by a user with no significantly different experience.

According to a further preferred embodiment of the smoking substitute system, the presence of the at least one further smoking substitute device may detected substantially without a user interaction.

In other words, the smoking substitute device or the mobile device may detect the presence of another smoking substitute device, e.g. by a signal or a beacon, and may, e.g. dependent on the sync settings in an app, automatically activate synchronization in particular including suitably adapting sync parameters. Such an automatic activation may be initiated as soon as an smoking substitute device or associated mobile device detects the presence of a further smoking substitute device or only when in a defined vicinity, e.g. within 2,3, 4, 5 or 10 meters. Likewise, when the presence detection is based on a relative location of one smoking substitute device relative to the location of a further smoking substitute device, or based on an absolute position of a further smoking substitute device, a similar closeness like mentioned above may be determined, thus e.g. the presence may be established within a defined set of parameters, and subsequently the sync may be initiated.

According to a further preferred embodiment of the smoking substitute system, the presence of the at least one further smoking substitute device may be detected by receiving a beacon signal sent from the at least one further smoking substitute device and/or the processing unit of the at least one further smoking substitute device, in particular by receiving a Bluetooth beacon or Bluetooth low energy beacon.

Using a beacon may allow for an easy implementation of the synchronization feature, in particular using a standardized communication platform.

According to a further preferred embodiment of the smoking substitute system, when a beacon signal is received, the receiving smoking substitute device and/or the processing unit may be sending a synced beacon signal, so that further smoking substitute devices are syncable by receiving the sent synced beacon, in particular the beacon may be adaptable for transmitting at least one synchronization parameter.

In other words, a smoking substitute device or associated mobile device may relay the sync signal, thereby extending the range or increasing the area where a synchronization between multiple devices may be realized.

According to a further preferred embodiment of the smoking substitute system, the at least one synchronization parameter comprises information about a function to be synchronized and/or information about the configuration of the synchronization.

According to a further preferred embodiment of the smoking substitute system, the presence of the at least one further smoking substitute device may be detected by determining a current location of the smoking substitute device relative to a current location of the at least one further the smoking substitute device or by receiving information about an absolute position of the at least one further smoking substitute device.

Such an absolute position may be determined by receiving a signal of a GPS, GLONASS, GALILEO or similar system. The signal may be received by a suitable element of a smoking substitute device or the processing unit, may be analysed appropriately, so that an absolute global position, in particular with a suitable accuracy, may be determined. Based on an own (absolute) position and that (absolute) position of another smoking substitute device, a presence may be detected by determining that a suitable closeness condition to establish a sync exists.

According to a further preferred embodiment of the smoking substitute system, the processing unit may be one of a control unit of a smoking substitute device, a mobile device in communicative connection with a smoking substitute device, and an application server in communicative connection with a smoking substitute device and/or a mobile device in communicative connection with a smoking substitute device.

According to a further preferred embodiment of the method, the presence of the at least one further smoking substitute device may be detected either directly or via at least one further processing unit in communicative connection with the at least one further smoking substitute device.

According to a further preferred embodiment of the method, the presence of the at least one further smoking substitute device may be detected by receiving a beacon signal sent from the at least one further smoking substitute device and/or the processing unit of the at least one further smoking substitute device, in particular by receiving a Bluetooth beacon or Bluetooth low energy beacon, and/or may be detected by determining a current location of the smoking substitute device relative to a current location of the at least one further the smoking substitute device or by receiving information about an absolute position of the at least one further smoking substitute device.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** shows an exemplary scenario of three smoking substitute devices about to be brought in each other's vicinity
**Figure 5** shows an exemplary scenario of three smoking substitute devices brought in each other's vicinity.
**Figure 6** shows an exemplary method of syncing at least two smoking substitute devices.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

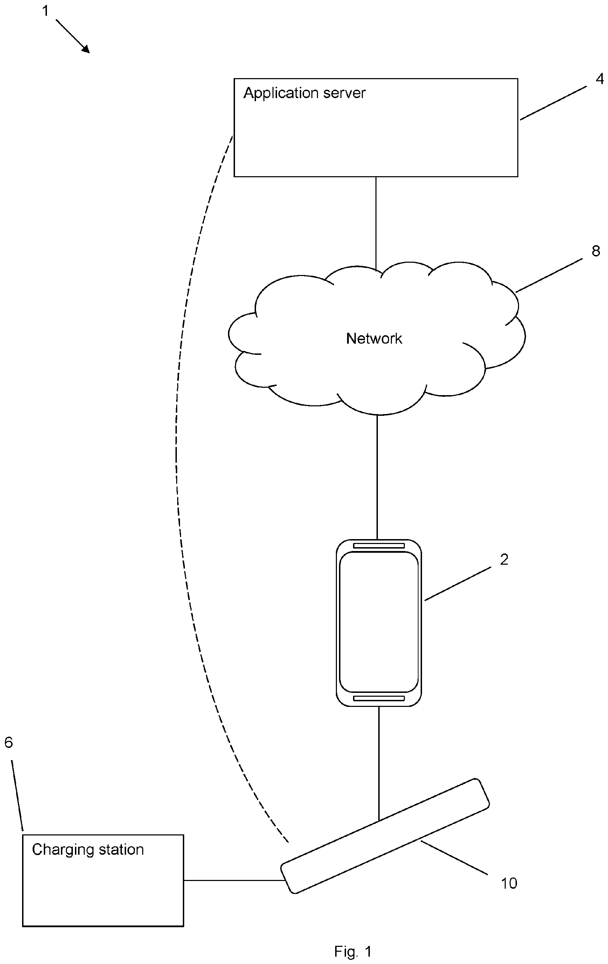

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

In other examples, the smoking substitute device 10 may be configured to communicate with the application server 4 via a connection that does not involve the mobile device 2, e.g. via a narrowband internet of things ("NB-loT") connection. In some examples, the mobile device 2 may be omitted from the system.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

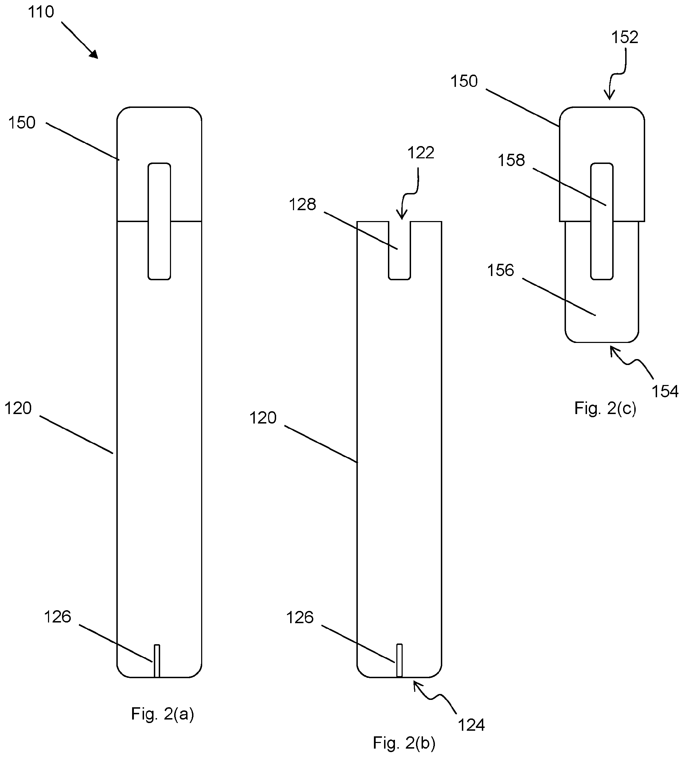

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light or illumination element 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

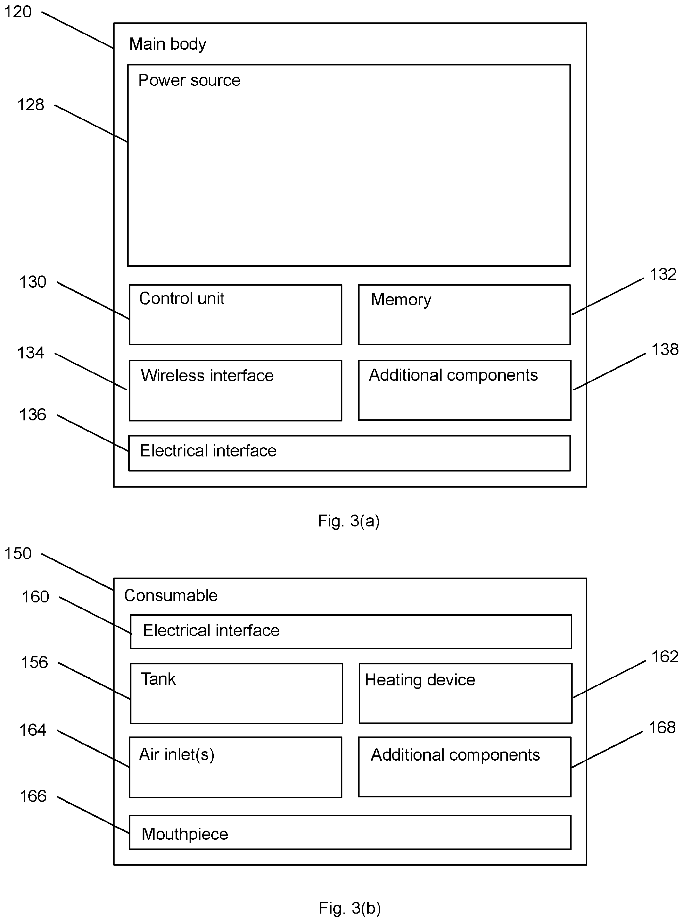

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

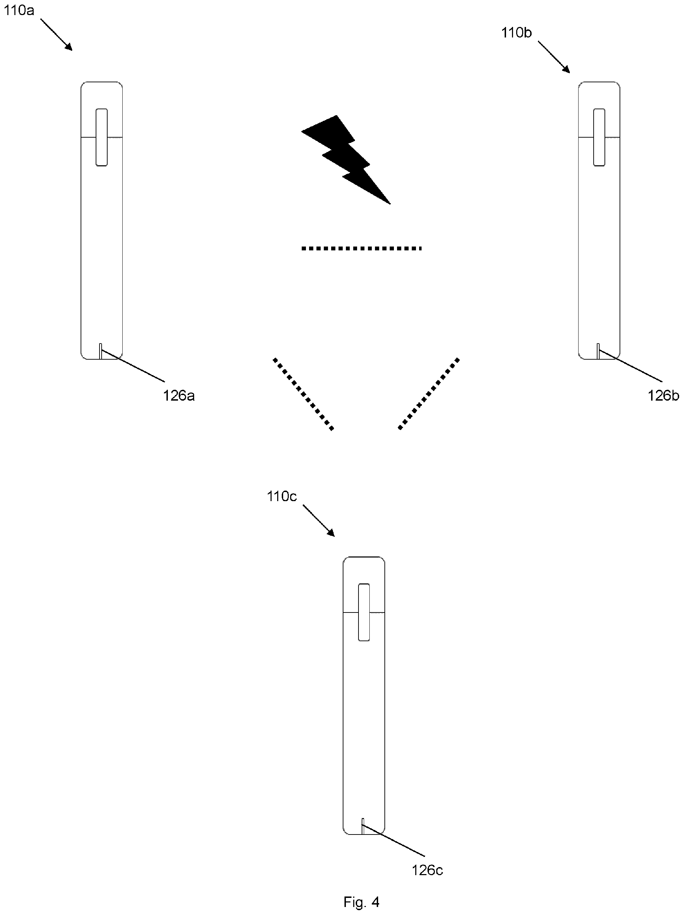

Fig. 4 shows an exemplary scenario of three smoking substitute devices about to be brought in each other's vicinity.

In Fig. 4, three smoking substitute devices 110a,b,c are depicted, each operated by a user, not depicted. Each smoking substitute device 110a,b,c has an illumination element 126a,b,c, as an example of a dedicated function of each smoking substitute device 110a,b,c, e.g. for providing a visual signal like a light or a glow or the like to a user. In Fig. 4, the three smoking substitute devices 110a,b,c are still spaced apart so that each smoking substitute device 110a,b,c neither detects the presence of another smoking substitute device 110a,b,c nor are the smoking substitute devices 110a,b,c in communication with one another. This lack of detected presence or lack of communication between the smoking substitute devices 110a,b,c is depicted by the black lighting and the three dashed lines in Fig. 4. Consequently, the smoking substitute devices 110a,b,c are not synced, in particular a light or glow emanating from the illumination element 126a,b,c, assuming a current use of the smoking substitute devices 110a,b,c may not be in sync.

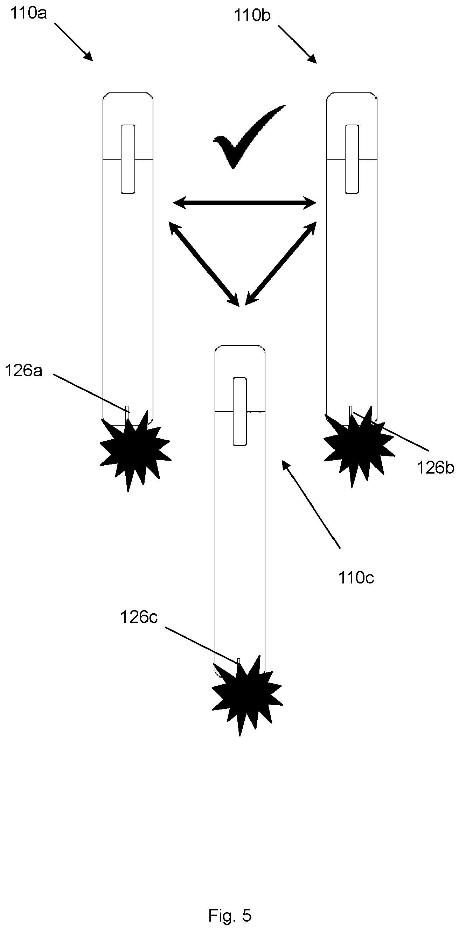

Fig. 5 shows an exemplary scenario of three smoking substitute devices brought in each other's vicinity. In Fig. 5, the three smoking substitute devices 110a,b,c have now knowledge about each other's presence or are now in communicative connection, or at least have brought close enough so to detect the presence of each other, symbolized by the black check sign and the solid arrow lines between the smoking substitute device 110a,b,c. This detection or communication may as well be realized by a processing unit connected thereto, like a processor, a control unit, a mobile device 2, a smartphone or an application server 4, not depicted in Fig. 5, associated with the respective smoking substitute device 110a,b,c.

As an example of a dedicated function to be synchronized may be taken from Fig. 5 in that the illumination elements 126a,b,c are lighting or glowing in a synchronized manner, as depicted by the black light flashes. The synchronization may be that the smoking substitute devices 110a,b,c are glowing in a similar or identical colour, and/or that an intensity and/or frequency of glow may be synchronized. Other dedicated functions as described in accordance with the present invention may be realized alternatively or additionally.

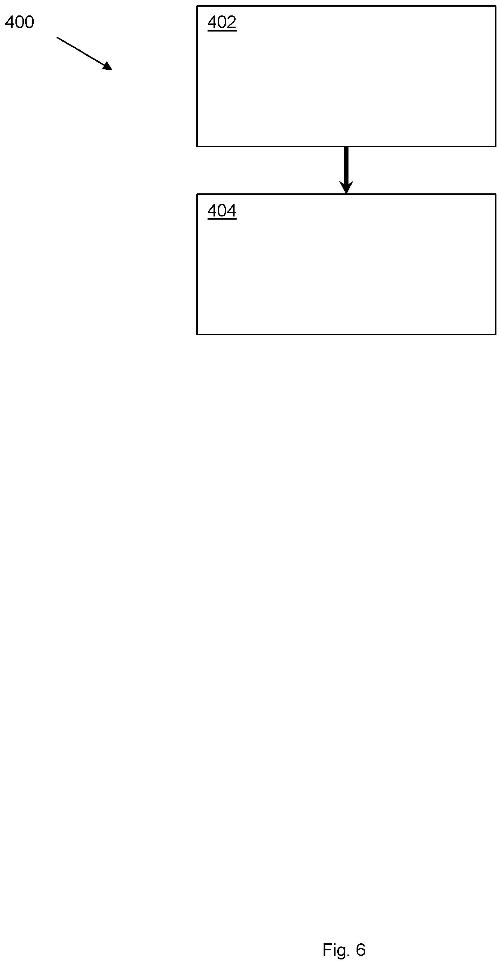

Fig. 6 shows an exemplary method of syncing at least two smoking substitute devices. The method 400 comprises detecting 402, by a processing unit 130,2,4 in communicative connection with a smoking substitute device, a presence of at least one further smoking substitute device, and syncing 404 a dedicated function of each smoking substitute device, when the presence of the at least one further smoking substitute device is detected.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A smoking substitute system (1), comprising
a smoking substitute device (10,110,110a,b,c), and
a processing unit (130,2,4) in communicative connection with the smoking substitute device and adapted to detect a presence of at least one further smoking substitute device (10,110,110a,b,c),
wherein, when the presence of the at least one further smoking substitute device is detected, a dedicated function of each smoking substitute device is syncable.

2. The smoking substitute system according to the preceding claim,
wherein detecting a presence comprises communicating with the least one further smoking substitute device.

3. The smoking substitute system according to at least one of the preceding claims,
wherein the presence of the at least one further smoking substitute device is detected either directly or via at least one further processing unit (130,2,4) in communicative connection with the at least one further smoking substitute device.

4. The smoking substitute system according to the preceding claim,
wherein the dedicated function is at least one function out of the group consisting of a visual function, an illumination function, an audible function, an acoustic function, a haptic function, a puff function, a puff intensity function, a puff duration function, an activation function, a lock function and a deactivation function.

5. The smoking substitute system according to at least one of the preceding claims, further comprising
at least one illumination element (126,126a,b,c),
wherein the illumination element of the smoking substitute device is synced with a respective illumination element (126,126a,b,c) of the at least one further smoking substitute device when the presence of the least one further smoking substitute device has been detected.

6. The smoking substitute system according to the preceding claim,
wherein the illumination element of the smoking substitute device and the illumination element of the at least one further smoking substitute device are synced such that the illumination elements illuminate is a similar colour and /or pulse with a similar frequency, in particular have synced minima and maxima of pulsation.

7. The smoking substitute system according to at least one of the preceding claims,
wherein the presence of the at least one further smoking substitute device is detected substantially without a user interaction.

8. The smoking substitute system according to at least one of the preceding claims,
wherein the presence of the at least one further smoking substitute device is detected by receiving a beacon signal sent from the at least one further smoking substitute device and/or the processing unit of the at least one further smoking substitute device, in particular by receiving a Bluetooth beacon or Bluetooth low energy beacon.

9. The smoking substitute system according to the preceding claim,
wherein when a beacon signal is received, the receiving smoking substitute device and/or the processing unit is sending a synced beacon signal, so that further smoking substitute devices are syncable by receiving the sent synced beacon, in particular wherein the beacon is adaptable for transmitting at least one synchronization parameter.

10. The smoking substitute system according to the preceding claim,
wherein the at least one synchronization parameter comprises information about a function to be synchronized and/or information about the configuration of the synchronization.

11. The smoking substitute system according to at least one of the preceding claims,
wherein the presence of the at least one further smoking substitute device is detected by determining a current location of the smoking substitute device relative to a current location of the at least one further the smoking substitute device or by receiving information about an absolute position of the at least one further smoking substitute device.

12. The smoking substitute system according to at least one of the preceding claims,
wherein the processing unit is one of a control unit (130) of a smoking substitute device (10,110,110a,b,c); a mobile device (2) in communicative connection with a smoking substitute device (10,110,110a,b,c); and an application server (4) in communicative connection with a smoking substitute device (10,110,110a,b,c) and/or a mobile device (2) in communicative connection with a smoking substitute device (10,110,110a,b,c).

13. A method (400) of syncing at least two smoking substitute devices (10,110,110a,b,c), comprising
detecting (402), by a processing unit (130,2,4) in communicative connection with a smoking substitute device, a presence of at least one further smoking substitute device, and
syncing (404) a dedicated function of each smoking substitute device, when the presence of the at least one further smoking substitute device is detected.

14. The method of the preceding claim,
wherein the presence of the at least one further smoking substitute device is detected either directly or via at least one further processing unit (130,2,4) in communicative connection with the at least one further smoking substitute device.

15. The method according to at least one of the preceding claims,
wherein the presence of the at least one further smoking substitute device is detected by receiving a beacon signal sent from the at least one further smoking substitute device and/or the processing unit of the at least one further smoking substitute device, in particular by receiving a Bluetooth beacon or Bluetooth low energy beacon, and/or
wherein the presence of the at least one further smoking substitute device is detected by determining a current location of the smoking substitute device relative to a current location of the at least one further the smoking substitute device or by receiving information about an absolute position of the at least one further smoking substitute device.
